# EUROPEAN PATENT APPLICATION

(11) **EP 3 163 508 A1**
(43) Date of publication of application: **03.05.2017**
(21) Application number: 16196099.2
(22) Date of filing: 27.10.2016
(51) Int. Cl.: G06K 9/00, G06K 9/62, G06K 9/46

(54) **FINGERPRINT RECOGNITION METHOD AND APPARATUS**

(30) Priority: 28.10.2015 CN 201510712896
(71) Applicant: Xiaomi Inc., Beijing 100085 (CN)
(72) Inventor: ZHANG, Tao, Haidian District, Beijing 100085 (CN); WANG, Pingze, Haidian District, Beijing 100085 (CN); ZHANG, Shengkai, Haidian District, Beijing 100085 (CN)
(74) Representative: Fontenelle, Sandrine

(57) **Abstract**

A fingerprint recognition method includes: performing (S101) feature extraction on a first fingerprint image acquired by a fingerprint sensor and a second fingerprint image stored in a database with an auto encode decode network to obtain a first fingerprint feature corresponding to the first fingerprint image and a second fingerprint feature corresponding to the second fingerprint image, the first fingerprint feature and the second fingerprint feature having an equal dimensionality; performing (S102) dimensionality reduction on the first fingerprint feature and the second fingerprint feature to respectively obtain a third fingerprint feature and a fourth fingerprint feature, the third fingerprint feature and the fourth fingerprint feature having an equal dimensionality; and determining (S103) whether the first fingerprint image and the second fingerprint image belong to a same fingerprint according to a cosine distance between the third fingerprint feature and the fourth fingerprint feature.

## Description

### TECHNICAL FIELD

The present disclosure generally relates to the field of image recognition technologies, and more particularly, to a fingerprint recognition method and apparatus.

### BACKGROUND

Since fingerprint recognition has been studied from about 1980, the fingerprint recognition was very mature and widely used in both civilian fields and military fields after 1990. However, in related technologies of fingerprint recognition, generally a user's fingerprint shall be not too dry, and a fingerprint image shall be clear enough, so that it is ensured that both global feature points and local feature points of the fingerprint are extracted successfully. However, when the fingerprint image is poor in quality, the fingerprint recognition may be inaccurate because it is failed to recognize the global feature points and the local feature points of the fingerprint, which affects the user experience on a fingerprint recognition product to a certain extent.

### SUMMARY

Accordingly, embodiments of the present disclosure provide a fingerprint recognition method and apparatus, in accordance with claims which follow, for improving an accuracy rate of fingerprint recognition for a low-quality fingerprint image.

According to a first aspect of the embodiments of the present disclosure, a fingerprint recognition method is provided, including:
performing feature extraction on a first fingerprint image acquired by a fingerprint sensor and a second fingerprint image stored in a database by using an auto encode decode network to obtain a first fingerprint feature corresponding to the first fingerprint image and a second fingerprint feature corresponding to the second fingerprint image, where the first fingerprint feature and the second fingerprint feature have an equal dimensionality;
performing dimensionality reduction on the first fingerprint feature and the second fingerprint feature to respectively obtain a third fingerprint feature and a fourth fingerprint feature, where the third fingerprint feature and the fourth fingerprint feature have an equal dimensionality which is smaller than the dimensionality of the first fingerprint feature and the second fingerprint feature; and
determining whether the first fingerprint image and the second fingerprint image belong to a same fingerprint according to a cosine distance between the third fingerprint feature and the fourth fingerprint feature.

In an embodiment, the auto encode decode network includes at least one encoding layer, and the method further includes:
training an encoding feature parameter of each encoding layer in the at least one encoding layer by using an unlabeled fingerprint sample to obtain an encoding feature representation parameter corresponding to each encoding layer;
performing data reconstruction on the encoding feature representation parameter corresponding to each encoding layer to obtain fingerprint reconstruction data of the unlabeled fingerprint sample by using a decoding layer corresponding to the encoding layer;
determining a reconstruction error between the fingerprint reconstruction data and the unlabeled fingerprint sample;
adjusting the encoding feature representation parameter corresponding to each encoding layer according to the reconstruction error; and
when the reconstruction error reaches a minimum value, stopping training the auto encode decode network to obtain an auto encode decode network after the first training.

In an embodiment, a last encoding layer of the auto encode decode network after the first training is connected with a classifier, and the method may further include:
inputting a labeled fingerprint sample to the auto encode decode network after the first training to obtain a second output result;
inputting the second output result to the classifier and training the classifier by using the labeled fingerprint sample; and
stopping training the classifier when a reconstruction error between a result outputted by the classifier and the labeled fingerprint sample reaches a minimum value.

In an embodiment, a last encoding layer of the auto encode decode network after the first training is connected with a classifier, and the method may further include:
inputting a labeled fingerprint sample to the auto encode decode network after the first training to obtain a first output result;
inputting the first output result to the classifier, training the classifier by using the labeled fingerprint sample and fine-tuning the encoding feature representation parameter corresponding to each encoding layer of the auto encode decode network after the first training; and
stopping training of the classifier and fine-tuning of the encoding feature representation parameter corresponding to each encoding layer when a reconstruction error between a result outputted by the classifier and the labeled fingerprint sample reaches a minimum value.

In an embodiment, the method may further include:
extracting an encoding feature representation parameter having a first setting dimensionality of the unlabeled fingerprint sample by using the trained auto encode decode network; and
performing linear discriminant analysis (LDA) training on the encoding feature representation parameter having the first setting dimensionality to obtain a projection matrix having a second setting dimensionality of the LDA.

In an embodiment, determining whether the first fingerprint image and the second fingerprint image belong to a same fingerprint according to a cosine distance between the third fingerprint feature and the fourth fingerprint feature may include:
comparing the cosine distance between the third fingerprint feature and the fourth fingerprint feature with a preset threshold;
determining that the first fingerprint image and the second fingerprint image belong to the same fingerprint if the cosine distance is greater than the preset threshold; and
determining that the first fingerprint image and the second fingerprint image belong to different fingerprints if the cosine distance is less than or equal to the preset threshold.

According to a second aspect of the embodiments of the present disclosure, a fingerprint recognition apparatus is provided, including:
a first extracting module configured to perform feature extraction on a first fingerprint image acquired by a fingerprint sensor and a second fingerprint image stored in a database by using an auto encode decode network to obtain a first fingerprint feature corresponding to the first fingerprint image and a second fingerprint feature corresponding to the second fingerprint image, where the first fingerprint feature and the second fingerprint feature have an equal dimensionality;
a dimensionality reduction module configured to perform dimensionality reduction on the first fingerprint feature and the second fingerprint feature extracted by the first extracting module to respectively obtain a third fingerprint feature and a fourth fingerprint feature, where the third fingerprint feature and the fourth fingerprint feature have an equal dimensionality which is smaller than the dimensionality of the first fingerprint feature and the second fingerprint feature; and
a recognition module configured to determine whether the first fingerprint image and the second fingerprint image belong to a same fingerprint according to a cosine distance between the third fingerprint feature and the fourth fingerprint feature on which the dimensionality reduction is performed by the dimensionality reduction module.

In an embodiment, the auto encode decode network includes at least one encoding layer, and the apparatus may further include:
a first training module configured to train an encoding feature parameter of each encoding layer in the at least one encoding layer by using an unlabeled fingerprint sample to obtain an encoding feature representation parameter corresponding to each encoding layer;
a first reconstruction module configured to perform data reconstruction on the encoding feature representation parameter corresponding to each encoding layer trained and obtained by the first training module to obtain fingerprint reconstruction data of the unlabeled fingerprint sample by using a decoding layer corresponding to the encoding layer;
a first determining module configured to determine a reconstruction error between the fingerprint reconstruction data determined by the first reconstruction module and the unlabeled fingerprint sample;
an adjusting module configured to adjust the encoding feature representation parameter corresponding to each encoding layer according to the reconstruction error determined by the first determining module; and
a first control module configured to stop, when the reconstruction error determined by the first determining module reaches a minimum value, training the auto encode decode network to obtain an auto encode decode network after the first training.

In an embodiment, a last encoding layer of the auto encode decode network after the first training is connected with a classifier, and the apparatus may further include:
a first processing module configured to input a labeled fingerprint sample to the auto encode decode network after the first training to obtain a first output result;
a second training module configured to input the first output result obtained by the first processing module to the classifier and train the classifier by using the labeled fingerprint sample; and
a second control module configured to control the second training module to stop training the classifier when a reconstruction error between a result outputted by the classifier and the labeled fingerprint sample reaches a minimum value.

In an embodiment, a last encoding layer of the auto encode decode network after the first training is connected with a classifier, and the apparatus may further include:
a second processing module configured to input a labeled fingerprint sample to the auto encode decode network after the first training to obtain a second output result;
a third training module configured to input the second output result obtained by the second processing module to the classifier, train the classifier by using the labeled fingerprint sample and fine-tune the encoding feature representation parameter corresponding to the each encoding layer of the auto encode decode network after the first training; and
a third control module configured to control the third training module to stop training of the classifier and fine-tuning of the encoding feature representation parameter corresponding to each encoding layer when a reconstruction error between a result outputted by the classifier and the labeled fingerprint sample reaches a minimum value.

In an embodiment, the apparatus may further include:
a second extracting module configured to extract an encoding feature representation parameter having a first setting dimensionality of the unlabeled fingerprint sample by using the trained auto encode decode network; and
a fourth training module configured to perform linear discriminant analysis LDA training on the encoding feature representation parameter having the first setting dimensionality extracted by the second extracting module to obtain a projection matrix having a second setting dimensionality of the LDA.

In an embodiment, the recognition module may include:
a comparing submodule configured to compare the cosine distance between the third fingerprint feature and the fourth fingerprint feature with a preset threshold;
a first determining submodule configured to determine that the first fingerprint image and the second fingerprint image belong to the same fingerprint if a comparative result obtained by the comparing submodule indicates that the cosine distance is greater than the preset threshold; and
a second determining submodule configured to determine that the first fingerprint image and the second fingerprint image belong to different fingerprints if the comparative result obtained by the comparing submodule indicates that the cosine distance is less than or equal to the preset threshold.

According to a third aspect of the embodiments of the present disclosure, a fingerprint recognition apparatus is provided, including:
a processor; and
a memory configured to store instructions executable by the processor;
where the processor is configured to:
perform feature extraction on a first fingerprint image acquired by a fingerprint sensor and a second fingerprint image stored in a database by using an auto encode decode network to obtain a first fingerprint feature corresponding to the first fingerprint image and a second fingerprint feature corresponding to the second fingerprint image, where the first fingerprint feature and the second fingerprint feature have an equal dimensionality;
perform dimensionality reduction on the first fingerprint feature and the second fingerprint feature to respectively obtain a third fingerprint feature and a fourth fingerprint feature, where the third fingerprint feature and the fourth fingerprint feature have an equal dimensionality which is smaller than the dimensionality of the first fingerprint feature and the second fingerprint feature; and
determine whether the first fingerprint image and the second fingerprint image belong to a same fingerprint according to a cosine distance between the third fingerprint feature and the fourth fingerprint feature.

According to a fourth aspect of the embodiment of the present disclosure, there is provided a computer program which, when being executed on a processor of a terminal device or an apparatus, performs any one of the above methods.

The technical solution provided by the embodiment of the present disclosure may achieve, at least in part, the following beneficial effects. The AED (Auto Encode Decode) network obtains fingerprint features by being trained on a lot of fingerprint images. Therefore, the first fingerprint feature corresponding to the first fingerprint image extracted by the AED network and the second fingerprint feature corresponding to the second fingerprint image may contain a fingerprint feature in favor of fingerprint recognition, thereby avoiding a problem in related art that fingerprint recognition is unable to be implemented without a global feature point and a local feature point of the fingerprint. When the fingerprint image is poor in quality, the AED network ensures, by recognizing the feature in favor of fingerprint recognition, that the fingerprint recognition can still be implemented when neither the global feature point nor the local feature point of the fingerprint is extracted due to a relatively low quality of the first fingerprint image, thereby greatly improving the accuracy of the fingerprint recognition for the low-quality fingerprint image. The computational complexity for the process of the fingerprint recognition may be greatly reduced by performing dimensionality reduction on the first fingerprint feature and the second fingerprint feature.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
FIG. 1A is a flowchart illustrating a fingerprint recognition method according to an exemplary embodiment;
FIG. 1B is a schematic diagram illustrating an AED network according to an exemplary embodiment;
FIG. 2A is a flowchart illustrating a fingerprint recognition method according to an exemplary embodiment;
FIG. 2B is a schematic diagram illustrating an AED network according to an exemplary embodiment;
FIG. 2C is a schematic diagram illustrating how to train the AED network according to an exemplary embodiment;
FIG. 3A is a flowchart illustrating how to fine-tune a parameter of the AED network with a labeled fingerprint sample according to an exemplary embodiment;
FIG. 3B is a flowchart illustrating how to fine-tune a parameter of a classifier connected to the AED network with the labeled fingerprint sample according to an exemplary embodiment;
FIG. 3C is a schematic diagram illustrating an AED network and a classifier according to another exemplary embodiment;
FIG. 4 is a flowchart illustrating a fingerprint recognition method according to an exemplary embodiment;
FIG. 5 is a block diagram illustrating a fingerprint recognition apparatus according to an exemplary embodiment;
FIG. 6 is a block diagram illustrating another fingerprint recognition apparatus according to an exemplary embodiment; and
FIG. 7 is a block diagram applicable to a fingerprint recognition device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

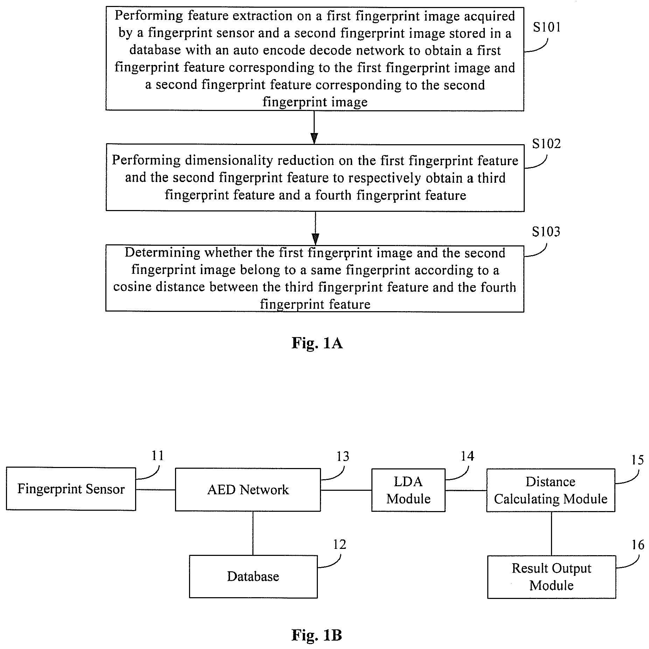

FIG. 1A is a flowchart illustrating a fingerprint recognition method according to an exemplary embodiment, and FIG. 1B is a schematic diagram illustrating an auto encode decode network according to an exemplary embodiment. The fingerprint recognition method may be applied in a fingerprint recognition device provided with a fingerprint sensor (for example, a smart mobile phone or a tablet computer having a function of fingerprint authentication, and a fingerprint punch card machine). As shown in FIG. 1A, the fingerprint recognition method includes the following steps S101-S103.

In Step S101, feature extraction is performed on a first fingerprint image acquired by a fingerprint sensor and a second fingerprint image stored in a database by using an auto encode decode network to obtain a first fingerprint feature corresponding to the first fingerprint image and a second fingerprint feature corresponding to the second fingerprint image, where the first fingerprint feature and the second fingerprint feature have an equal dimensionality.

In an embodiment, fingerprint images of users may be acquired and stored in the database. For example, fingerprint images of all employees in Company A may be stored in the database. When a User B's fingerprint needs to be authenticated, a first fingerprint image of User B can be acquired by the fingerprint sensor. In an embodiment, an auto encode decode (abbreviated as AED) network may include an encoding layer and a decoding layer, the first fingerprint image is inputted into the encoding layer, and the encoding layer outputs an encoding feature of the first fingerprint image. The encoding feature is then inputted into a decoding layer corresponding to the encoding layer, and the decoding layer outputs the first fingerprint feature of the first fingerprint image. Correspondingly, the second fingerprint feature of the second fingerprint image may be obtained from the second fingerprint image in the database in the same way as the first fingerprint image.

In Step S102, dimensionality reduction is performed on the first fingerprint feature and the second fingerprint feature to respectively obtain a third fingerprint feature and a fourth fingerprint feature, where the third fingerprint feature and the fourth fingerprint feature have an equal dimensionality which is smaller than the dimensionality of the first fingerprint feature and the second fingerprint feature.

In an embodiment, dimensionality reduction may be performed on the first fingerprint feature and the second fingerprint feature using a trained linear discriminant analysis (abbreviated as LDA). For example, a fingerprint feature of an unlabeled fingerprint sample having a first setting dimensionality may be extracted by using the trained AED network. A LDA training may be performed on the fingerprint feature having the first setting dimensionality. In this way, a projection matrix having a second setting dimensionality of the LDA is obtained. For example, an encoding feature representation parameter having the first setting dimensionality (e.g. 500 dimensions) is output from the unlabeled fingerprint sample outputs via the AED network. After the LDA training, dimensionalities of the encoding feature representation parameter may be reduced, by using the trained LDA, to the second setting dimensionality (e.g. 200 dimensions). In this way, a complexity in calculating a cosine distance may be reduced.

In Step S103, it is determined whether the first fingerprint image and the second fingerprint image belong to a same fingerprint according to a cosine distance between the third fingerprint feature and the fourth fingerprint feature.

In an embodiment, the cosine distance between the third fingerprint feature and the fourth fingerprint feature may be compared with a preset threshold. It is determined that the first fingerprint image and the second fingerprint image belong to the same fingerprint if the cosine distance is greater than the preset threshold. It is determined that the first fingerprint image and the second fingerprint image belong to different fingerprints if the cosine distance is less than or equal to the preset threshold.

For an exemplary scene, as shown in FIG. 1B, when User B needs a fingerprint authentication, the first fingerprint image of User B is acquired by the fingerprint sensor 11, and the first fingerprint image along with the second fingerprint image which has been stored in the database 12 are inputted into the trained AED network 13. The AED network 13 then outputs the first fingerprint feature corresponding to the first fingerprint image and the second fingerprint feature corresponding to the second fingerprint image. For example, both the first fingerprint feature and the second fingerprint feature are fingerprint features having 500 dimensionalities. Dimensionality reduction is then performed on the first fingerprint feature and the second fingerprint feature having 500 dimensionalities by using the projection matrix of an LDA module 14. For example, dimensionalities of the first fingerprint feature and the second fingerprint feature are reduced by the LDA module 14 from 500 dimensionalities to 200 dimensionalities, i.e., the LDA module 14 outputs a third fingerprint feature obtained by reducing the dimensionalities of the first fingerprint feature and a fourth fingerprint feature obtained by reducing the dimensionalities of the second fingerprint feature. For example, both the third fingerprint feature and the fourth fingerprint feature have 200 dimensionalities. A distance calculating module 15 calculates the cosine distance between the third fingerprint feature and the fourth fingerprint feature having 200 dimensionalities, and a result output module 16 compares the cosine distance with a threshold, i.e., the cosine distance is divided based on the threshold. When the cosine distance is greater than the threshold, the result output module 16 outputs a result indicating that the first fingerprint image and the second fingerprint image belong to the same fingerprint. When the cosine distance is less than or equal to the threshold, the result output module 16 outputs a result indicating that the first fingerprint image and the second fingerprint image belong to different fingerprints.

In this embodiment, the AED network obtains fingerprint features by training on a lot of fingerprint images. Therefore, the first fingerprint feature corresponding to the first fingerprint image and the second fingerprint feature corresponding to the second fingerprint image extracted by the AED network may contain a fingerprint feature facilitating fingerprint recognition, thereby avoiding that fingerprint recognition in related art is unable to be implemented without a global feature point and a local feature point of the fingerprint. When the fingerprint image is poor in quality, the AED network ensures, by recognizing a feature facilitating fingerprint recognition, that the fingerprint recognition still can be implemented when neither the global feature point nor the local feature point of the fingerprint is extracted due to a relatively low quality of the first fingerprint image, thereby greatly improving the accuracy in the fingerprint recognition of the low-quality fingerprint image. The computational complexity for the fingerprint recognition may be greatly reduced by performing the dimensionality reduction on the first fingerprint feature and the second fingerprint feature.

In an embodiment, the AED network includes at least one encoding layer, and the fingerprint recognition method may further include:
training an encoding feature parameter for each encoding layer in the at least one encoding layer by using an unlabeled fingerprint sample to obtain an encoding feature representation parameter corresponding to each encoding layer;
performing data reconstruction on the encoding feature representation parameter corresponding to each encoding layer to obtain fingerprint reconstruction data of the unlabeled fingerprint sample by using a decoding layer corresponding to the encoding layer;
determining a reconstruction error between the fingerprint reconstruction data and the unlabeled fingerprint sample;
adjusting the encoding feature representation parameter corresponding to the each encoding layer according to the reconstruction error; and
when the reconstruction error reaches a minimum value, stopping training the AED network to obtain a first-time trained AED network.

In an embodiment, the last encoding layer of the first-time trained AED network is connected with a classifier, and the method may further include:
inputting a labeled fingerprint sample to the first-time trained AED network to obtain a first output result;
inputting the first output result to the classifier and training the classifier by using the labeled fingerprint sample; and
stopping training the classifier when a reconstruction error between a result outputted by the classifier and the labeled fingerprint sample reaches a minimum value.

In an embodiment, the last encoding layer of the first-time trained AED network is connected with a classifier, and the method may further include:
inputting a labeled fingerprint sample to the first-time trained AED network to obtain a second output result;
inputting the second output result to the classifier, training the classifier by using the labeled fingerprint sample and fine-tuning the encoding feature representation parameter corresponding to the each encoding layer of the first-time trained AED network; and
stopping training the classifier and fine-tuning the encoding feature representation parameter corresponding to the each encoding layer when a reconstruction error between the result outputted by the classifier and the labeled fingerprint sample reaches a minimum value.

In an embodiment, the method may further include:
extracting the encoding feature representation parameter having a first setting dimensionality of the unlabeled fingerprint sample by using the trained AED network; and
performing LDA training on the encoding feature representation parameter having the first setting dimensionality to obtain the projection matrix having a second setting dimensionality of the LDA.

In an embodiment, the determination of whether the first fingerprint image and the second fingerprint image belong to a same fingerprint according to a cosine distance between the third fingerprint feature and the fourth fingerprint feature may include:
comparing the cosine distance between the third fingerprint feature and the fourth fingerprint feature with a preset threshold;
determining that the first fingerprint image and the second fingerprint image belong to the same fingerprint when the cosine distance is greater than the preset threshold; and
determining that the first fingerprint image and the second fingerprint image belong to different fingerprints when the cosine distance is less than or equal to the preset threshold.

Subsequent embodiments are described on how to implement the fingerprint recognition.

According to the method provided by the embodiments of the present disclosure, a problem in related art, that fingerprint recognition is unable to be implemented without a global feature point and a local feature point of the fingerprint, can be avoided, and the fingerprint recognition still can be implemented regardless of neither the global feature point nor the local feature point of the fingerprint is extracted due to a relatively low quality of the first fingerprint image, thereby greatly improving the accuracy for the fingerprint recognition of the low-quality fingerprint image, and greatly reducing the computational complexity for the fingerprint recognition.

The technical solution provided by the embodiments of the present disclosure is illustrated with reference to specific embodiments hereinafter.

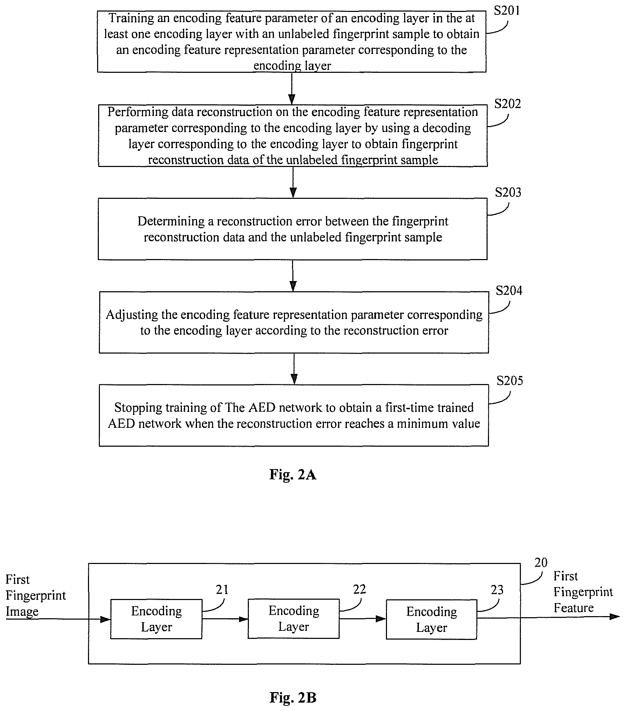

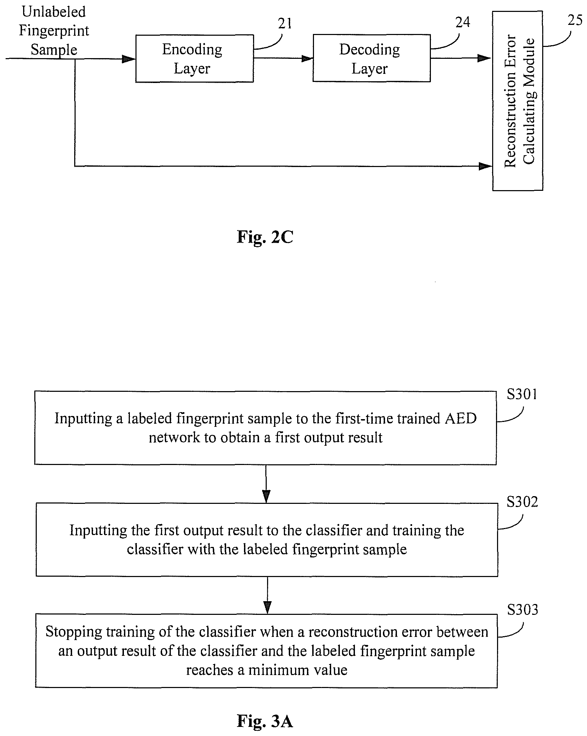

FIG. 2A is a flowchart illustrating a fingerprint recognition method according to an exemplary embodiment, FIG. 2B is a schematic diagram illustrating an AED network according to an exemplary embodiment, and FIG. 2C is a schematic diagram illustrating how to train the AED network according to an exemplary embodiment. In this embodiment, the method provided by the embodiments of the present disclosure is illustrated through an exemplary description by taking how to train the AED network and the LDA with the unlabeled fingerprint sample as an example. As shown in FIG. 2A, the fingerprint recognition method includes the following steps.

In Step S201, the encoding feature parameter of each encoding layer in the at least one encoding layer is trained by using the unlabeled fingerprint sample to obtain the encoding feature representation parameter corresponding to each encoding layer.

In Step S202, data reconstruction is performed on the encoding feature representation parameter corresponding to each encoding layer by using a decoding layer corresponding to the encoding layer to obtain fingerprint reconstruction data of the unlabeled fingerprint sample.

In Step S203, a reconstruction error between the fingerprint reconstruction data and the unlabeled fingerprint sample is determined.

In Step S204, the encoding feature representation parameter corresponding to each encoding layer is adjusted according to the reconstruction error.

In Step S205, training of the AED network is stopped when the reconstruction error reaches a minimum value.

In an embodiment, the AED network includes at least one encoding layer. For example, the AED network 20 as shown in FIG. 2B includes 3 encoding layers (respectively the encoding layer 21, the encoding layer 22 and the encoding layer 23). As shown in FIG. 2C, an exemplary description is made by taking how to train the encoding layer 21 as an example. For a lot of unlabeled fingerprint samples (for example, 600 thousand unlabeled fingerprint samples), each unlabeled fingerprint sample may be inputted into the encoding layer 21, and an encoding feature representation parameter of the unlabeled fingerprint sample is obtained from the encoding layer 21. The encoding feature representation parameter is a representation of the inputted unlabeled fingerprint sample. In order to verify whether the encoding feature representation parameter is consistent with the unlabeled fingerprint sample, the encoding feature representation parameter may be inputted into the decoding layer 24, and the reconstruction error between output information of the decoding layer 24 and the unlabeled fingerprint sample is obtained through calculation of a reconstruction error calculating module 25. When the reconstruction error has not reached yet a minimum value, the encoding feature representation parameter of the encoding layer 21 may be adjusted according to the reconstruction error until it reaches the minimum value indicative of a case that the encoding feature representation parameter can represent the unlabeled fingerprint sample in the encoding layer 21.

By using a training manner similar to the encoding layer 21, it can be verified whether the encoding feature representation parameter respectively corresponding to the encoding layer 22 and the encoding layer 23 is consistent with the unlabeled fingerprint sample, by using the decoding layer respectively corresponding to the encoding layer 22 and the encoding layer 23, until the encoding layer 22 and the encoding layer 23 can represent the unlabeled fingerprint sample, which is not expatiated in the present disclosure.

In this embodiment, the AED network is trained to encode a fingerprint image, and the fingerprint image is represented by an encoding feature representation parameter. When the number of the unlabeled fingerprint samples reaches a certain number, the trained AED network is able to recognize a fingerprint image feature and enable fingerprint recognition, thereby avoiding a fingerprint recognition error caused by a failure in extraction of a global feature point and a local feature point from a low-quality fingerprint image.

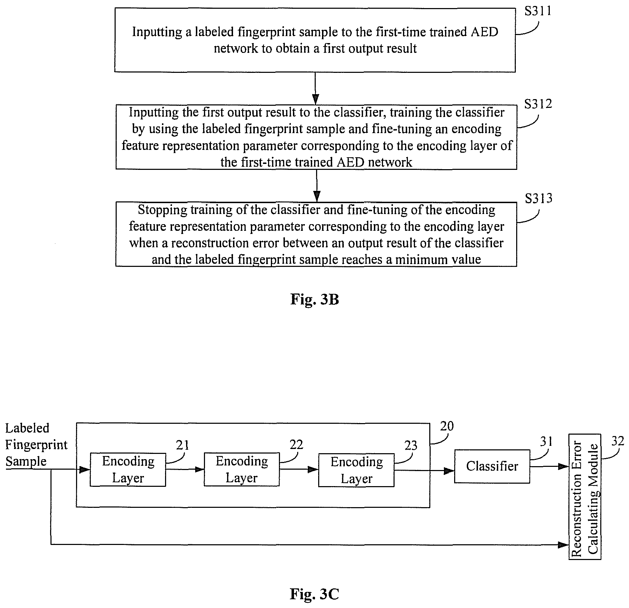

FIG. 3A is a flowchart illustrating how to fine-tune a parameter of the AED network by using a labeled fingerprint sample according to an exemplary embodiment, FIG. 3B is a flowchart illustrating how to fine-tune a parameter of a classifier connected to the AED network by using the labeled fingerprint sample according to an exemplary embodiment, and FIG. 3C is a schematic diagram illustrating the AED network and the classifier according to another exemplary embodiment.

As shown in FIG. 3A, the fingerprint recognition method includes the following steps.

In Step S301, the labeled fingerprint sample is inputted to the first-time trained AED network to obtain a first output result.

In Step S302, the first output result is inputted to the classifier and the classifier is trained by using the labeled fingerprint sample.

In Step S303, training of the classifier is stopped when a reconstruction error between a result outputted by the classifier and the labeled fingerprint sample reaches a minimum value.

As shown in FIG. 3C, after the AED network is trained through the embodiment as shown in FIG. 2A, encoding feature representation parameters of multiple encoding layers (the encoding layer 21, the encoding layer 22 and the encoding layer 23 as shown in FIG. 3C) of the AED network 20 may be acquired. Different expressions of the unlabeled fingerprint sample may be obtained from each encoding layer. Those skilled in the art may understand that the present disclosure does not limit the number of layers in the AED network.

In order to implement classification of the AED network, a classifier 31 may be additionally provided for the encoding layer (for example, the encoding layer 23) at the top layer of the AED network. The classifier 31 may be, for example, a logistic regression classifier or an SVM classifier. The classifier 31 is trained by using the first output result of the labeled fingerprint sample through a standard supervised training method (for example, gradient descent method) of a standard multi-layer neural network. The training of the classifier 31 is stopped when the reconstruction error, calculated and obtained by a reconstruction error calculating module 32, between a result outputted by the classifier and the labeled fingerprint sample reaches a minimum value, thereby implementing the classification function of the AED network 20.

As shown in FIG. 3B, the fingerprint recognition method includes the following steps.

In Step S311, the labeled fingerprint sample is inputted to the first-time trained AED network to obtain a first output result.

In Step S312, the first output result is inputted into the classifier, the classifier is trained by using the labeled fingerprint sample, and the encoding feature representation parameter corresponding to each encoding layer of the first-time trained AED network is fine-tuned.

In Step S313, training of the classifier and fine-tuning of the encoding feature representation parameter corresponding to each encoding layer is stopped when the reconstruction error between the result outputted by the classifier and the labeled fingerprint sample reaches a minimum value.

Similar to the description of FIG. 3A, the classifier 31 is trained by using the first output result of the labeled fingerprint sample through a standard supervised training method (for example, gradient descent method) of a standard multi-layer neural network, and encoding feature representation parameters corresponding to the encoding layer 21, the encoding layer 22 and the encoding layer 23 are fine-tuned. The training of the classifier 31 is stopped when the reconstruction error, calculated and obtained by a reconstruction error calculating module 32, between a result outputted by the classifier and the labeled fingerprint sample reaches the minimum value. On the basis of implementing classification of the AED network 20, fine-tuning of the AED network 20 can also be implemented. When there is enough data of the labeled fingerprint sample, end-to-end learning can be achieved for the AED network, thereby improving the accuracy of fingerprint recognition for the AED network and the classifier. In other words, the more samples, the more training can be carried on, and the AED network 20 will be more precise.

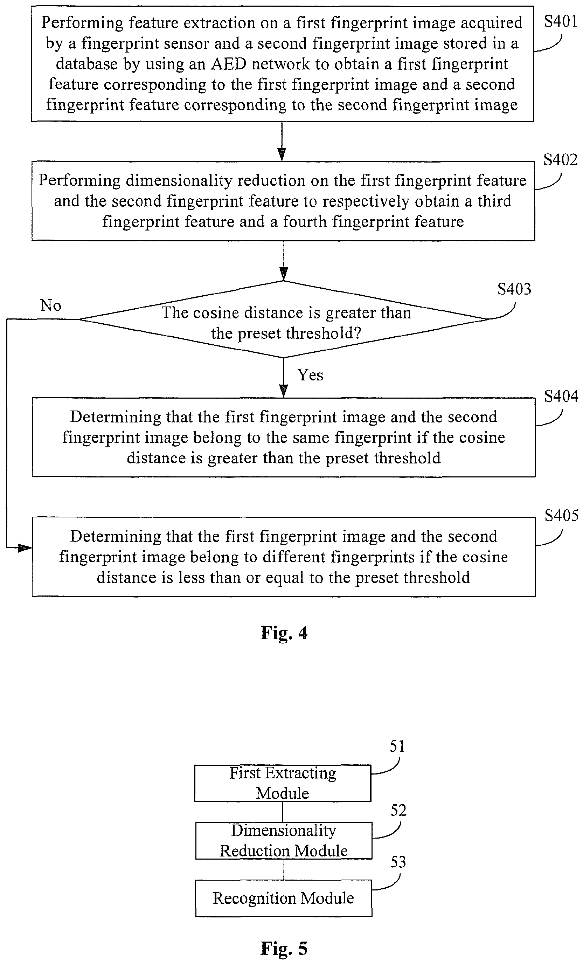

FIG. 4 is a flowchart illustrating a fingerprint recognition method according to an exemplary embodiment. In this embodiment, an exemplary description of the foregoing method provided by the embodiments of the present disclosure is made by taking how to conduct fingerprint recognition through a cosine distance as an example. As shown in FIG. 4, the method includes the following steps.

In Step S401, feature extraction is performed on the first fingerprint image acquired by the fingerprint sensor and the second fingerprint image stored in the database by using the AED network to obtain a first fingerprint feature corresponding to the first fingerprint image and a second fingerprint feature corresponding to the second fingerprint image, where the first fingerprint feature and the second fingerprint feature have an equal dimensionality.

In Step S402, dimensionality reduction is performed on the first fingerprint feature and the second fingerprint feature to respectively obtain a third fingerprint feature and a fourth fingerprint feature, where the third fingerprint feature and the fourth fingerprint feature have an equal dimensionality which is smaller than the dimensionality of the first fingerprint feature and the second fingerprint feature.

Related description of Steps S401 and S402 may be referred to the description of the embodiment as shown in FIG. 1A, which is not expatiated herein.

In Step S403, the cosine distance between the third fingerprint feature and the fourth fingerprint feature is compared with the preset threshold. Step S404 is executed when the cosine distance is greater than the preset threshold, and Step S405 is executed when the cosine distance is less than or equal to the preset threshold.

In Step S404, it is determined that the first fingerprint image and the second fingerprint image belong to a same fingerprint when the cosine distance is greater than the preset threshold.

In Step S405, it is determined that the first fingerprint image and the second fingerprint image belong to different fingerprints when the cosine distance is less than or equal to the preset threshold.

In Step S403, an appropriate preset threshold may be obtained by training a large number of fingerprint samples in a sample database, and the preset threshold may be a recognition error rate acceptable to the user. For example, when there are 100 thousand pairs of within-class samples and one million of between-class samples in the sample database, in order to ensure the recognition error rate to be within one thousandth, a value between 0 and 1 may be obtained by calculating the cosine distance of each pair of samples. Herein, the number of cosine distance values of the within-class samples is 100 thousand, and the number of cosine distance values of the between-class samples is one million, namely, 1.1 million of cosine distance values are obtained. An appropriate preset threshold can be thus determined by using the 1.1 million of cosine distance values with reference to the recognition error rate.

In addition to the advantageous technical effects of the foregoing embodiments, in this embodiment, a fingerprint is recognized based on the cosine distance between the third fingerprint feature and the fourth fingerprint feature. The preset threshold can be obtained by training a large number of fingerprint samples with reference to the recognition error rate acceptable to the user. Therefore, user experience on a fingerprint recognition product can be improved to a certain extent.

FIG. 5 is a block diagram illustrating a fingerprint recognition apparatus according to an exemplary embodiment. As shown in FIG. 5, the fingerprint recognition apparatus includes:
a first extracting module 51 configured to perform feature extraction on a first fingerprint image acquired by a fingerprint sensor and a second fingerprint image stored in a database by using an AED network to obtain a first fingerprint feature corresponding to the first fingerprint image and a second fingerprint feature corresponding to the second fingerprint image, where the first fingerprint feature and the second fingerprint feature have an equal dimensionality;
a dimensionality reduction module 52 configured to perform dimensionality reduction processing on the first fingerprint feature and the second fingerprint feature extracted by the first extracting module 51 to respectively obtain a third fingerprint feature and a fourth fingerprint feature, where the third fingerprint feature and the fourth fingerprint feature have an equal dimensionality which is smaller than the dimensionality of the first fingerprint feature and the second fingerprint feature; and
a recognition module 53 configured to determine whether the first fingerprint image and the second fingerprint image belong to a same fingerprint according to a cosine distance between the third fingerprint feature and the fourth fingerprint feature obtained through the dimensionality reduction performed by the dimensionality reduction module 52.

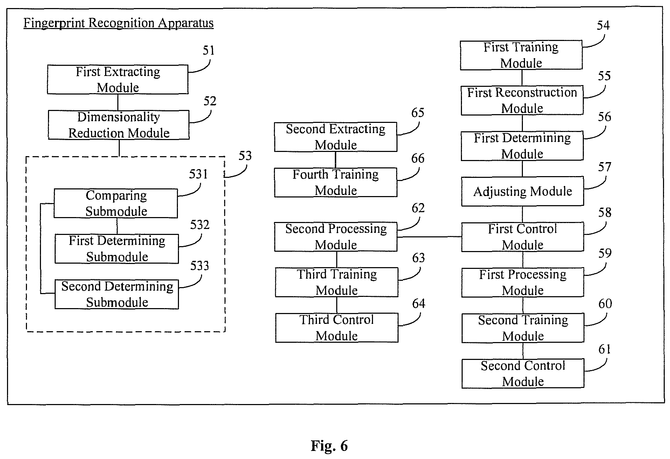

FIG. 6 is a block diagram illustrating another fingerprint recognition apparatus according to an exemplary embodiment. As shown in FIG. 6, on a basis of the embodiment as shown in FIG. 5, in an embodiment, the AED network includes at least one encoding layer, and the apparatus may further include:
a first training module 54 configured to train the encoding feature parameter of each encoding layer in the at least one encoding layer by using the unlabeled fingerprint sample to obtain an encoding feature representation parameter corresponding to each encoding layer;
a first reconstruction module 55 configured to perform data reconstruction on the encoding feature representation parameter corresponding to each encoding layer obtained through training of the first training module 54 to obtain fingerprint reconstruction data of the unlabeled fingerprint sample by using a decoding layer corresponding to the encoding layer;
a first determining module 56 configured to determine a reconstruction error between the fingerprint reconstruction data determined by the first reconstruction module 55 and the unlabeled fingerprint sample;
an adjusting module 57 configured to adjust the encoding feature representation parameter corresponding to each encoding layer according to the reconstruction error determined by the first determining module 56; and
a first control module 58 configured to stop, when the reconstruction error determined by the first determining module 57 reaches a minimum value, training the AED network to obtain a first-time trained AED network.

In an embodiment, the last encoding layer of the first-time trained AED network may be connected with a classifier, and the apparatus may further include:
a first processing module 59 configured to input a labeled fingerprint sample to the first-time trained AED network to obtain a first output result;
a second training module 60 configured to input the first output result obtained by the first processing module 59 to the classifier and train the classifier by using the labeled fingerprint sample; and
a second control module 61 configured to control the second training module 60 to stop training the classifier when a reconstruction error between a result outputted by the classifier and the labeled fingerprint sample reaches a minimum value.

In an embodiment, the last encoding layer of the first-time trained AED network may be connected with a classifier, and the apparatus may further include:
a second processing module 62 configured to input the labeled fingerprint sample to the first-time trained AED network to obtain a second output result;
a third training module 63 configured to input the second output result obtained by the second processing module 62 to the classifier, train the classifier by using the labeled fingerprint sample and fine-tune the encoding feature representation parameter corresponding to the each encoding layer of the first-time trained AED network; and
a third control module 64 configured to control the third training module 63 to stop training the classifier and fine-tuning the encoding feature representation parameter corresponding to the each encoding layer when the reconstruction error between the result outputted by the classifier and the labeled fingerprint sample reaches a minimum value.

In an embodiment, the apparatus may further include:
a second extracting module 65 configured to extract an encoding feature representation parameter having the first setting dimensionality of the unlabeled fingerprint sample by using the trained AED network; and
a fourth training module 66 configured to perform LDA training on the encoding feature representation parameter having the first setting dimensionality extracted by the second extracting module 65 to obtain a projection matrix having the second setting dimensionality of the LDA.

In an embodiment, the recognition module 53 may include:
a comparing submodule 531 configured to compare the cosine distance between the third fingerprint feature and the fourth fingerprint feature with a preset threshold;
a first determining submodule 532 configured to determine that the first fingerprint image and the second fingerprint image belong to a same fingerprint when a comparative result obtained by the comparing submodule 531 indicates that the cosine distance is greater than the preset threshold; and
a second determining submodule 533 configured to determine that the first fingerprint image and the second fingerprint image belong to different fingerprints when the comparative result obtained by the comparing submodule 531 indicates that the cosine distance is less than or equal to the preset threshold.

With regard to the apparatus in the foregoing embodiments, specific manners for executing operation by modules thereof have been described in detail in the embodiments related to the method, and thus are not elaborated herein.

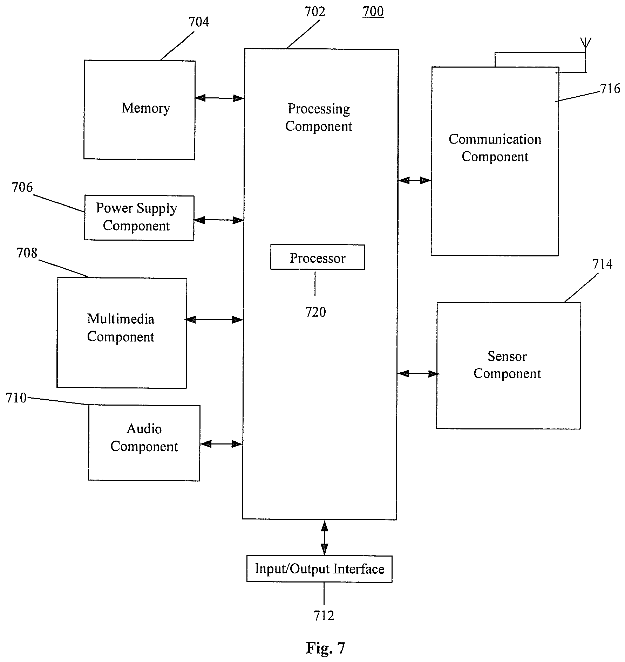

FIG. 7 is a block diagram applicable to a fingerprint recognition device according to an exemplary embodiment. For example, the apparatus 700 may be a mobile telephone, a computer, a digital broadcasting terminal, a message transceiver device, a games console, a tablet device, a medical device, a fitness facility, a personal digital assistant and the like.

Referring to FIG. 7, the apparatus 700 may include one or more components as below: a processing component 702, a memory 704, a power supply component 706, a multimedia component 708, an audio component 710, an input/output (I/O) interface 712, a sensor component 714 and a communications component 716.

The processing component 702 generally controls the overall operation of the apparatus 700, for example, operations associated with display, telephone call, data communications, camera operation and record operation. The processing component 702 may include one or more processors 720 for executing an instruction to complete steps of the foregoing method in part or in whole. In addition, the processing component 702 may include one or more modules for the convenience of interaction between the processing component 702 and other components. For example, the processing component 702 may include a multimedia module for the convenience of interaction between the multimedia component 708 and the processing component 702.

The memory 704 is configured to store various types of data so as to support the operation of the apparatus 700. Examples of the data include an instruction of any application program or method operated on the apparatus 700, contact data, phonebook data, a message, a picture and a video, etc. The memory 704 may be implemented by any type of volatile or non-volatile memory device or a combination thereof, for example, a static random access memory (SRAM), an electrically erasable programmable read-only memory (EEPROM), an erasable programmable read only memory (EPROM), a programmable read-only memory (PROM), a read-only memory (ROM), a magnetic memory, a flash memory, a magnetic disk or an optical disk.

The power supply component 706 provides power for various components of the apparatus 700. The power supply component 706 may include a power management system, one or more power supplies, and other components associated with generation, management and power distribution of the apparatus 700.

The multimedia component 708 includes a screen between the apparatus 700 and a user for providing an output interface. In some embodiments, the screen may include a liquid crystal display (LCD) and a touch panel (TP). If the screen includes a touch panel, the screen may be implemented as a touch screen for receiving an input signal from the user. The touch panel includes one or more touch sensors for sensing a touch, slide and gestures on the touch panel. The touch sensor may not only sense a boundary of a touch or slide, but also detect the time duration and pressure related to the touch or slide operation. In some embodiments, the multimedia component 708 includes a front-facing camera and/or a rear-facing camera. When the apparatus 700 is in an operation mode, for example, a shooting mode or a video mode, the front-facing camera and/or the rear-facing camera may receive external multimedia data. Each front-facing camera and rear-facing camera may be a fixed optical lens system or have a focal length and optical zoom capacity.

The audio component 710 is configured to output and/or input an audio signal. For example, the audio component 710 includes a microphone (MIC); when the apparatus 700 is in an operation mode such as a call mode, a record mode and a speech recognition mode, the microphone is configured to receive an external audio signal. The received audio signal may be further stored in the memory 704 or sent out by the communications component 716. In some embodiments, the audio component 710 also includes a loudspeaker for outputting the audio signal.

The I/O interface 712 provides an interface for the processing component 702 and a peripheral interface module, and the peripheral interface module may be a keyboard, a click wheel and buttons, etc. These buttons may include but are not limited to: a home button, a volume button, a start button and a lock button.

The sensor component 714 includes one or more sensors for providing the apparatus 700 with a state evaluation from all aspects. For example, the sensor component 714 may detect the on/off state of the apparatus 700, relative positioning of components, for example, the components are the displayer and keypads of the apparatus 700; the sensor component 714 also may detect the position change of the apparatus 700 or a component thereof, the presence or absence of the user's touch on the apparatus 700, the direction or acceleration/deceleration of the apparatus 700, and temperature variation of the apparatus 700. The sensor component 714 may also include a proximity detector, which is configured to detect the presence of a nearby object in case of no physical contact. The sensor component 714 may also include an optical sensor, for example, a CMOS or CCD image sensor, used in the application of imaging. In some embodiments, the sensor component 714 may also include an acceleration sensor, a gyro sensor, a magnetic sensor, a pressure sensor, or a temperature sensor.

The communications component 716 is configured to facilitate wired communications or wireless communications between the apparatus 700 and other devices. The apparatus 700 is available for access to a wireless network based on communications standards, for example, Wi-Fi, 2G or 3G, or a combination thereof. In an exemplary embodiment, the communications component 716 receives, by means of a broadcast channel, a broadcast signal or broadcast-related information from an external broadcast management system. In an exemplary embodiment, the communications component 716 also includes a near field communication (NFC) module to promote short-range communications. For example, the NFC module may be implemented on the basis of Radio Frequency Identification (RFID) Technology, Infrared Data Association (IrDA) Technology, Ultra-wide Bandwidth (UWB) Technology, Bluetooth (BT) Technology and other technologies.

In an exemplary embodiment, the apparatus 700 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronic components to execute the foregoing method.

In an exemplary embodiment, a non-transitory computer-readable storage medium including an instruction is also provided, for example, a memory 704 including the instruction, and the instruction may be executed by the processor 720 of the apparatus 700 to achieve the foregoing method. For example, the non-transitory computer-readable storage medium may be a ROM, a random access memory (RAM), a CD-ROM, a magnetic tape, a floppy disk and an optical data memory device, etc.

## Claims

1. A fingerprint recognition method, comprising:
performing (S101) feature extraction on a first fingerprint image acquired by a fingerprint sensor (11) and a second fingerprint image stored in a database (12) with an auto encode decode network (13) to obtain a first fingerprint feature corresponding to the first fingerprint image and a second fingerprint feature corresponding to the second fingerprint image, the first fingerprint feature and the second fingerprint feature having an equal dimensionality;
performing (S102) dimensionality reduction on the first fingerprint feature and the second fingerprint feature to respectively obtain a third fingerprint feature and a fourth fingerprint feature, the third fingerprint feature and the fourth fingerprint feature having an equal dimensionality smaller than the dimensionality of the first fingerprint feature and the second fingerprint feature; and
determining (S103) whether the first fingerprint image and the second fingerprint image belong to a same fingerprint according to a cosine distance between the third fingerprint feature and the fourth fingerprint feature.

2. The method of claim 1, wherein the auto encode decode network comprises at least one encoding layer, and the method further comprises:
training (S201) an encoding feature parameter for each encoding layer in the at least one encoding layer with an unlabeled fingerprint sample to obtain an encoding feature representation parameter corresponding to each encoding layer;
performing (S202) a data reconstruction on the encoding feature representation parameter corresponding to each encoding layer to obtain fingerprint reconstruction data of the unlabeled fingerprint sample through a decoding layer corresponding to the encoding layer;
determining (S203) a reconstruction error between the fingerprint reconstruction data and the unlabeled fingerprint sample;
adjusting (S204) the encoding feature representation parameter corresponding to the encoding layer according to the reconstruction error; and
stopping (S205) training the auto encode decode network, when the reconstruction error reaches a minimum value, to obtain a trained auto encode decode network.

3. The method of claim 2, wherein a last encoding layer of the trained auto encode decode network is connected with a classifier, and the method further comprises:
inputting (S301) a labeled fingerprint sample to the trained auto encode decode network to obtain a first output result;
inputting (S302) the first output result to the classifier and training the classifier with the labeled fingerprint sample; and
stopping (S303) training the classifier when a reconstruction error between an output result of the classifier and the labeled fingerprint sample reaches a minimum value.

4. The method of claim 2, wherein a last encoding layer of the trained auto encode decode network is connected with a classifier, and the method further comprises:
inputting (S311) a labeled fingerprint sample to the trained auto encode decode network to obtain a second output result;
inputting (S312) the second output result to the classifier, training the classifier with the labeled fingerprint sample and fine-tuning the encoding feature representation parameter corresponding to the encoding layer of the trained auto encode decode network; and
stopping (S313) training the classifier and fine-tuning the encoding feature representation parameter corresponding to the encoding layer when a reconstruction error between an output result of the classifier and the labeled fingerprint sample reaches a minimum value.

5. The method of claim 2, further comprising:
extracting an encoding feature representation parameter having a first setting dimensionality of the unlabeled fingerprint sample with the trained auto encode decode network; and
performing linear discriminant analysis LDA training on the encoding feature representation parameter having the first setting dimensionality to obtain a projection matrix having a second setting dimensionality of the LDA.

6. The method of any of claims 1 to 5, wherein determining whether the first fingerprint image and the second fingerprint image belong to a same fingerprint according to a cosine distance between the third fingerprint feature and the fourth fingerprint feature comprises:
comparing (S403) the cosine distance between the third fingerprint feature and the fourth fingerprint feature with a preset threshold;
determining (S404) that the first fingerprint image and the second fingerprint image belong to the same fingerprint when the cosine distance is greater than the preset threshold; and
determining (S405) that the first fingerprint image and the second fingerprint image belong to different fingerprints when the cosine distance is less than or equal to the preset threshold.

7. A fingerprint recognition apparatus, comprising:
a first extracting module (51) configured to perform feature extraction on a first fingerprint image acquired by a fingerprint sensor and a second fingerprint image stored in a database with an auto encode decode network to obtain a first fingerprint feature corresponding to the first fingerprint image and a second fingerprint feature corresponding to the second fingerprint image, the first fingerprint feature and the second fingerprint feature having an equal dimensionality;
a dimensionality reduction module (52) configured to perform dimensionality reduction on the first fingerprint feature and the second fingerprint feature extracted by the first extracting module to respectively obtain a third fingerprint feature and a fourth fingerprint feature, the third fingerprint feature and the fourth fingerprint feature having an equal dimensionality smaller than the dimensionality of the first fingerprint feature and the second fingerprint feature; and
a recognition module (53) configured to determine whether the first fingerprint image and the second fingerprint image belong to a same fingerprint according to a cosine distance between the third fingerprint feature and the fourth fingerprint feature obtained through the dimensionality reduction of the dimensionality reduction module.

8. The apparatus of claim 7, wherein the auto encode decode network comprises at least one encoding layer, and the apparatus further comprises:
a first training module (54) configured to train an encoding feature parameter for each encoding layer in the at least one encoding layer with an unlabeled fingerprint sample to obtain an encoding feature representation parameter corresponding to each encoding layer;
a first reconstruction module (55) configured to perform data reconstruction on the encoding feature representation parameter corresponding to each encoding layer obtained through the train of the first training module, with a decoding layer corresponding to the encoding layer, to obtain fingerprint reconstruction data of the unlabeled fingerprint sample;
a first determining module (56) configured to determine a reconstruction error between the fingerprint reconstruction data determined by the first reconstruction module and the unlabeled fingerprint sample;
an adjusting module (57) configured to adjust the encoding feature representation parameter corresponding to the encoding layer according to the reconstruction error determined by the first determining module; and
a first control module (58) configured to stop, when the reconstruction error determined by the first determining module reaches a minimum value, training the auto encode decode network to obtain a trained auto encode decode network.

9. The apparatus of claim 8, wherein a last encoding layer of the trained auto encode decode network is connected with a classifier, and the apparatus further comprises:
a first processing module (59) configured to input a labeled fingerprint sample to the trained auto encode decode network to obtain a first output result;
a second training module (60) configured to input the first output result obtained by the first processing module to the classifier and train the classifier with the labeled fingerprint sample; and
a second control module (61) configured to control the second training module to stop training the classifier when the reconstruction error between an output result of the classifier and the labeled fingerprint sample reaches a minimum value.

10. The apparatus of claim 8, wherein a last encoding layer of the trained auto encode decode network is connected with a classifier, and the apparatus further comprises:
a second processing module (62) configured to input a labeled fingerprint sample to the trained auto encode decode network to obtain a second output result;
a third training module (63) configured to input the second output result obtained by the second processing module to the classifier, train the classifier with the labeled fingerprint sample and fine-tune the encoding feature representation parameter corresponding to the encoding layer of the trained auto encode decode network; and
a third control module (64) configured to control the third training module to stop training the classifier and fine-tuning the encoding feature representation parameter corresponding to the encoding layer when a reconstruction error between an output result of the classifier and the labeled fingerprint sample reaches a minimum value.

11. The apparatus of claim 8, further comprising:
a second extracting module (65) configured to extract an encoding feature representation parameter having a first setting dimensionality of the unlabeled fingerprint sample with the trained auto encode decode network; and
a fourth training module (66) configured to perform linear discriminant analysis LDA training on the encoding feature representation parameter having the first setting dimensionality extracted by the second extracting module to obtain a projection matrix having a second setting dimensionality of the LDA.

12. The apparatus of claim 7, wherein the recognition module comprises:
a comparing submodule (531) configured to compare the cosine distance between the third fingerprint feature and the fourth fingerprint feature with a preset threshold;
a first determining submodule (532) configured to determine that the first fingerprint image and the second fingerprint image belong to the same fingerprint when a comparative result obtained by the comparing submodule indicates that the cosine distance is greater than the preset threshold; and
a second determining submodule (533) configured to determine that the first fingerprint image and the second fingerprint image belong to different fingerprints when the comparative result obtained by the comparing submodule indicates that the cosine distance is less than or equal to the preset threshold.

13. A computer program, which when executing on a processor of a terminal device, performs a method according to any one of claims 1 to 6.
